# EUROPEAN PATENT SPECIFICATION

(11) **EP 0 566 065 B1**
(45) Date of publication and mention of the grant of the patent: **16.07.1997**
(21) Application number: 93105999.2
(22) Date of filing: 13.04.1993
(51) Int. Cl.: A47C 7/18

(54) **Seat padding, for example, for vehicle seats**
Polstermaterial, zum Beispiel für Fahrzeugsitze
Rembourrage, par exemple pour sièges de véhicules

(30) Priority: 16.04.1992 IT TO920345
(43) Date of publication of application: 20.10.1993
(73) Proprietor: FIAT AUTO S.p.A., 10135 Torino (IT)
(72) Inventor: Dal Monte, Antonio, I-00196 Roma (IT)
(74) Representative: Bosotti, Luciano

(56) References cited:
- EP-A- 0 042 169
- US-A- 3 712 673
- US-A- 4 784 437

## Description

The present invention relates in general to seats and has been developed with particular attention to its possible application to vehicle seats, for example, to the rear seats of motor cars.

From this point of view, the present invention constitutes a further development of the solutions described in some prior patent applications in the name of the present Applicant.

For example, European patent application EP-A-0 363 330 describes a motor-vehicle seat, the seat element (or "squab") of which is constituted substantially by a mass of laminated soft material including an intermediate layer having plastic memory characteristics. The subsequent European patent application EP-A-0 467 123 describes a solution in which the intermediate layer is constituted by a wire mesh.

European patent application EP-A-0 407 361 describes how, for example, grooves or notches may be formed in the mass of material constituting the padding for the backrest so as to modify selectively the deformability characteristics of the padding.

From US-A-3 712 673 and US-A-4 784 437 are known seat cushions in wich one or more grooves are present in their side surfaces

Moreover, European patent application EP-A-0 407 362 describes how grooves in the body of the seat can house heat-exchange units for heating and/or cooling the seat.

In particular, the present invention addresses the problem of optimising the flexibility of the outer or distal end portions of the two elements (the squab and the backrest, but particularly the squab, for reasons which will become clearer from the following) constituting the seat.

According to the present invention, this object is achieved by seat padding with the specific characteristics recited in the claims which follow.

The invention will now be described, purely by way of non-limiting example with reference to the appended drawings, in which:
Figure 1 is a vertical median section of the padding applied to a motor-vehicle seat, and
Figure 2 is a view of the portion of Figure 1 indicated by the arrow II, on an enlarged scale.

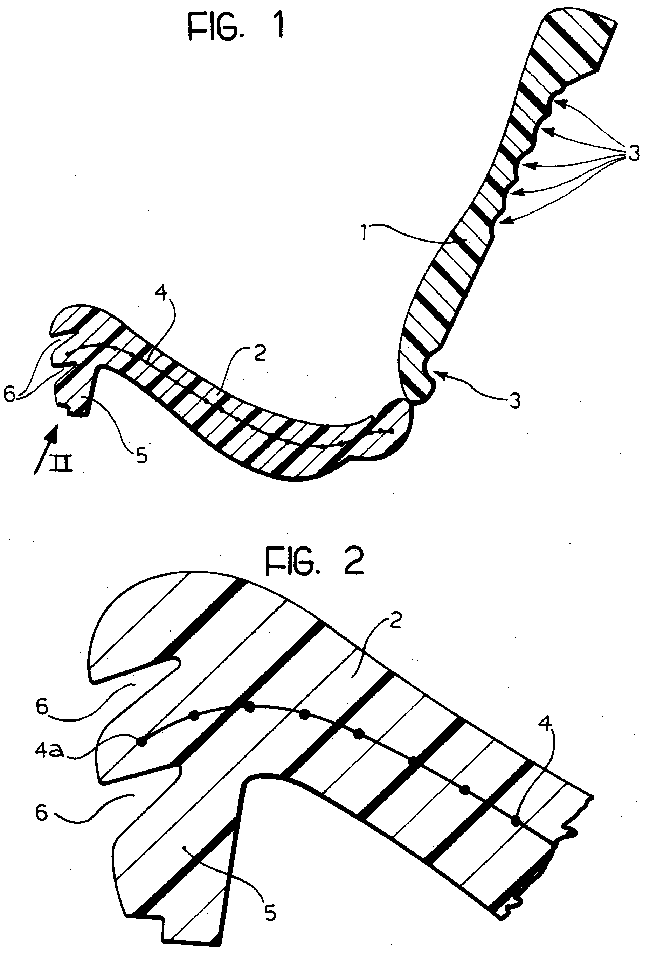

Figure 1 is a general view of the padding of foamed material (for example, polyethylene or polyurethane) applied to the structure of a motor-vehicle seat (not shown as a whole), for example, a rear seat for a motor car.

The criteria for the formation of the padding and for its application to the structure of framework of the seat are widely known in the art and do not need to be described extensively herein, particularly since they are not relevant for the purposes of an understanding of the invention.

The padding of Figure 1 is divided generally into two bodies or pads; the first, indicated 1, is applied to the backrest of the seat; the second, indicated 2, on the other hand, is applied to the seat element or "squab" of the seat.

According to a known solution (see, for example, the European patent application EP-A-0 407 361 already cited above) the backrest pad 1 has a plurality of generally horizontal grooves or recesses 3 in its rear face, particularly in the region corresponding to the seat-occupant's back. Theoretically, these grooves or recesses may be regarded as resulting from the selective removal of some of the material constituting the pad. The presence of such ribs is intended to modify the yielding characteristics of the pad 1 so as to achieve precise restraint of the occupant's back.

Like the pad 1, the pad 2 for the squab of the seat is also constituted essentially by a mass of soft, possibly laminated, material. A wire mesh 4 is incorporated in the pad 2 in a generally intermediate position to form (according to the general teachings of the European patent applications EP-A-0 363 330 and EP-A-0 467 123 already cited above) an intermediate layer having characteristics of yieldingness and a plastic memory.

It will be noted, moreover, that the pad 2 is generally dished and has a lipped front end 5 which projects downwardly at the front edge (the outer or distal edge) of the squab so as to surround and cover the underlying framework of the squab (not shown explicitly in the drawings).

According to an important characteristic of the present invention, the mass of absorbent material constituting the lipped end 5 and, more precisely, the outer front face thereof has one or more grooves or recesses 6 having characteristics which - as regards the way in which they are produced during the formation of the pad 2 or by the working thereof after moulding - are substantially comparable to the grooves 3 in the rear face of the pad 1.

The grooves or recesses 6 have the function of making the outer or distal front edge of the pad 2 more flexible.

It will be appreciated that, according to a currently-preferred embodiment, there are at least two grooves or recesses 6 located respectively above and below the front end 4a of the wire mesh 4. Naturally, there could be a different number of grooves; for example, there could be one or more grooves 6 above the lower end 4a of the mesh 4 and/or one or more grooves 6 below the front end of the mesh 4.

The grooves 6 usually extend generally horizontally or, at most, are slightly curved so as to correspond to the shape of the front edge of the pad 2.

A similar arrangement of grooves could possibly also be provided at the other edges (for example, the side edges) of the squab and/or in the backrest pad 1, for example, at its upper end or along its sides.

In practical tests it has been found that, in a seat with padding having the characteristics described above, the so-called H-point can generally be lower and further back. This improves comfort; in this connection, the solution according to the invention is considered to be suitable for use to particular advantage for the rear seats (so-called bench seats) of motor cars.

The variable bearing capacity of the front lip 5 of the squab achieved by the grooves 6 corresponds in an optimal manner to the variable bearing capacity and the different profile of the backrest 3 achieved by the grooves 3 on its rear face.

In theory, the generally dished profile of the squab 2 is connected with the presence of the mesh 4 which is positioned in order to prevent bumping. Naturally, the layer of the pad 2 beneath the mesh 4 may have resilience (bearing) characteristics different from those of the upper layer. Preferably, the lower layer is usually slightly softer and more yielding than the upper layer.

## Claims

1. Seat padding, for example, for vehicle seats, made of a soft material and having at least one generally outer, distal edge (5) in use, the edge having at least one groove (6) for selectively modifying the flexibility characteristics of the edge,
the padding being applied to the squab of the seat, and the at least one groove (6) being in the front edge (5) of the squab,
the padding incorporating an intermediate layer (4) of a material which is generally less yielding than the pad (2) as a whole, characterised in that it has at least two sets of grooves (6) respectively above and below the intermediate layer.

2. Padding according to Claim 1, characterised in that the front edge (5) has a generally lipped configuration.

3. Padding according to any one of the preceding claims, characterised in that the at least one groove extends generally horizontally.

## Patentansprüche

1. Sitzpolsterung zum Beispiel für Fahrzeugsitze, die aus einem weichen Material hergestellt ist und mindestens eine äußere, bei Benutzung distale Kante (5) aufweist, wobei die Kante mindestens eine Aussparung (6) für das selektive Verändern der elastischen Eigenschaften der Kante besitzt und die Polsterung als Kissen des Sitzes Verwendung findet und mindestens eine Aussparung (6) an der Vorderkante (5) des Kissen angebracht ist, wobei die Polsterung eine Zwischenschicht (4) aus einem Material, das im wesentlichen weniger nachgiebig ist als das Kissen (2), als Ganzes aufnimmt, **dadurch gekennzeichnet**, daß sie mindestens zwei Gruppen von Aussparungen (6) oberhalb bzw. unterhalb der Zwischenschicht besitzt.

2. Polsterung nach Anspruch 1, **dadurch gekennzeichnet**, daß die Vorderkante (5) einen im wesentlichen lippenförmigen Aufbau hat.

3. Polsterung nach jedem der vorhergehenden Ansprüche, **dadurch gekennzeichnet**, daß mindestens eine Aussparung im wesentlichen horizontal verläuft.

## Revendications

1. Rembourrage de siège par exemple, pour sièges de véhicules, fait d'une matière souple et ayant au moins un bord généralement extérieur, distal (5) en utilisation, le bord présentant au moins une gorge (6) destinée à modifier sélectivement les caractéristiques de flexibilité du bord, le rembourrage étant appliqué au coussin d'assise du siège, et la au moins une gorge (6) étant prévue dans le bord avant (5) du coussin d'assise, le rembourrage comprenant une couche intermédiaire (4) faite d'une matière qui est généralement moins souple que le rembourrage (2) dans son ensemble, caractérisé en ce qu'il possède au moins deux jeux de gorges (6) situées respectivement au-dessus et au-dessous de la couche intermédiaire.

2. Rembourrage selon la revendication 1, caractérisé en ce que le bord avant (5) a une configuration sensiblement en forme de lèvre.

3. Rembourrage selon une quelconque des revendications précédentes, caractérisé en ce que la au moins une gorge s'étend sensiblement horizontalement.
